# EUROPEAN PATENT SPECIFICATION

(11) **EP 2 189 359 B1**
(45) Date of publication and mention of the grant of the patent: **03.07.2013**
(21) Application number: 08020289.8
(22) Date of filing: 21.11.2008
(51) Int. Cl.: B62J 6/00

(54) **Bicycle control device**
Steuerungseinrichtung für ein Fahrrad
Dispositif de commande d'une bicyclette

(43) Date of publication of application: 26.05.2010
(73) Proprietor: Chen, Yi-Lun, Taipei City 110 (TW)
(72) Inventor: Chen, Yi-Lun, Taipei City 110 (TW)
(74) Representative: Cooke, Tracey

(56) References cited:
- EP-A- 0 268 338
- EP-A- 1 464 569
- US-A- 6 072 386

## Description

### FIELD OF THE INVENTION

The present invention relates to a bicycle control device, and more particularly to a bicycle control device for sensing the speed of the bicycle and lightness around the bicycle, in order to control the lamps and the lock of the bicycle.

### BACKGROUND OF THE INVENTION

With the increasing fuel price, more and more people living in the modern society choose not to drive a car or ride a motorcycle so frequently, so as to achieve the purpose of saving money and energy and reducing carbon. Riding bicycle and taking public transportation means are two alternatives for driving cars and riding motorcycles. Particularly, bicycle is not only a convenient traffic means, but also an ideal exercise apparatus. Therefore, various types of bicycle meters for sensing a bicycle's traveling information and a rider's body signals have been developed.

Taiwan Utility Model No. M327829 discloses an integrated control device for mounting on a bicycle having at least one lamp. The integrated bicycle control device includes a keypad, a microprocessor, a wireless transceiver, and a display unit. The microprocessor is electrically connected to the keypad for receiving signals generated by pressing the keys of the keypad and sending out a driving signal accordingly. The driving signal is then transmitted by the wireless transceiver to another wireless transceiver mounted on the lamp of the bicycle for controlling the on/off of the lamp. The display unit is electrically connected to the microprocessor for displaying the on/off state of the lamp on the bicycle.

Generally, assemblies mounted to the bicycle may include lighting components or various types of sensors. For example, speed sensors, head lamps, tail lamps, locks and warning units ... etc. However, the components mentioned above work independently and lack cooperative functions. Therefore, a user must manipulate each component separately. When the user is not familiar with the operation, or forgets to switch on/off e.g. the lamps or the warning unit, the battery is out of electricity or the bicycle is stolen. As a result, it causes a waste of electricity, and also cause user to be inconvenient.

US 6072386 discloses a microprocessor unit controlling an array of LEDs in response to a wheel speed sensor and a light sensor. The light sensor turns the light on while the environment is dark, and the microprocessor unit drives the LEDs at a rate controlled by the input signal of the wheel speed sensor.

EP 1464569 A2 teaches a power supply on a bicycle including a dynamo that powers an electromechanical automatic gearshift. Bicycle speed is detected based on the frequency of the AC dynamo output or via a reed switch or Hall effect sensor in combination with a magnet mounted on the wheel. The headlight is turned on and off in accordance with ambient light conditions.

EP 0268338 A2 discloses a system, in which an induction sensor and/or a vibration sensor is arranged to sense movement of the crank axle, and a timing circuit is arranged to illuminate the lamps when movement is sensed and when an ambient light sensor indicates low ambient light.

None of US 6072386, EP 1464569A2 or EP 0268338A2 discloses a control device capable of detecting speed of the bicycle and lightness around the bicycle with reference to rotation speed of a pedal of the bicycle or physiological state of the user to control the lamp coupled to the control device and further adjust the luminance of the lamp.

### SUMMARY OF THE INVENTION

A primary object of the present invention is to provide a bicycle control device, so as to integrate various components with a bicycle control device and provide some interrelated functions among the components. In addition, by means of sensing the situation of the riding bicycle the specific functions of the bicycle are executed correspondingly.

The means to solve the foregoing problems is to provide a bicycle control device comprising a speed sensing unit, a light sensing unit, a microprocessor, at least one lamp, a lock and a warning unit. When the bicycle is being ridden, the speed sensing unit detects the speed of the bicycle and generates a speed signal; the light sensing unit detects the lightness around the bicycle and generates a lightness signal. The microprocessor of the control device sends a command signal to trigger the lamp at a full light level or normal light level. Once the bicycle is being parked for a long time, the microprocessor turns off the lamp and triggers the lock to lock the bicycle, and turns on the warning unit simultaneously.

With the technical means adopted by the present invention, the speed of a bicycle and lightness around the bicycle can be sensed when a user rides the bicycle, so that the microprocessor may control the light level of the lamp or turn off the lamp. In that case, the user does not have to adjust the light level of the lamp manually according to lightness around the bicycle, so as to avoid some possible traffic accidents. On the other hand, when the bicycle is being parked, the microprocessor can determine to turn on/off the lamp in accordance with the parking time, and determine to lock/unlock the bicycle.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a perspective view of a control module of a bicycle control device in accordance with the present invention;
Fig. 2 is a circuit block diagram of a bicycle control device in accordance with a first embodiment of the present invention;
Fig. 3 is a perspective view of the bicycle control device of the first embodiment of the present invention;
Fig. 4 is a circuit block diagram of a bicycle control device in accordance with a second embodiment of the present invention;
Fig. 5 is a perspective view of the bicycle control device of the second embodiment;
Fig. 6 is a flow chart of an operation of a bicycle control device in accordance with the present invention;
Fig. 7 is a flow chart of lamp regulation at different speeds ; and
Fig. 8 is a flow chart of automatic electricity management for the present invention.

### DETAILED DESCRIPTION OF THE PREFERRED EMBODIMENTS

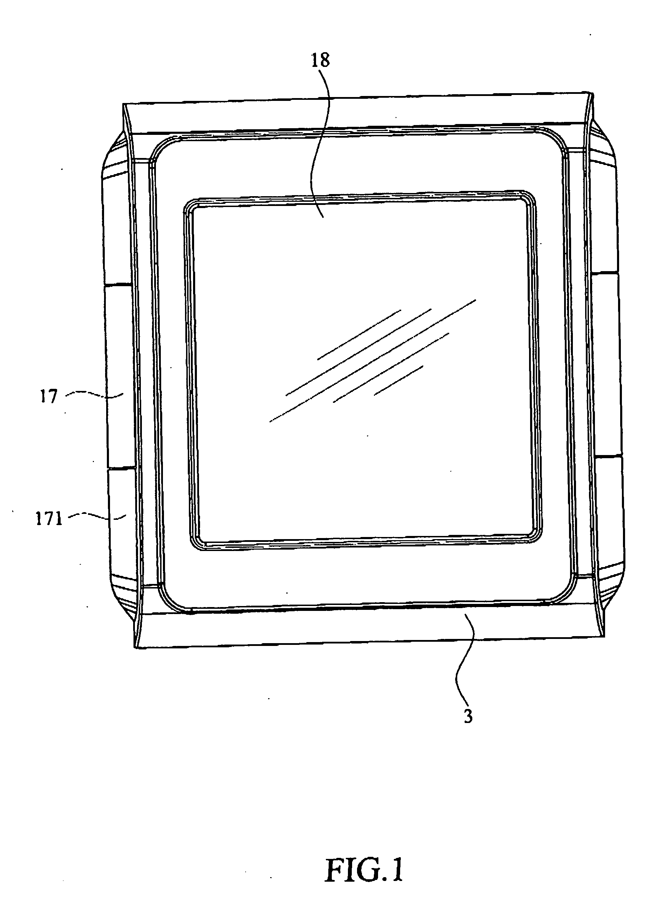

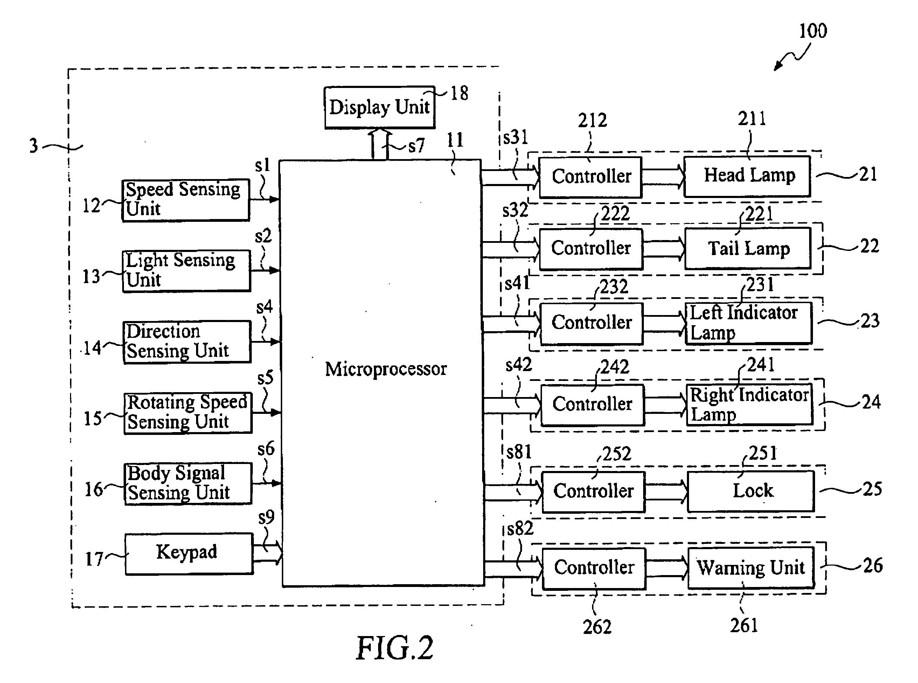

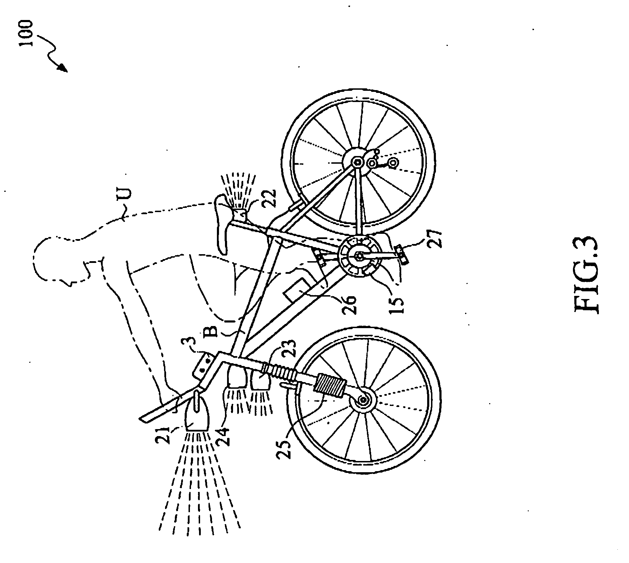

With reference to Fig. 1 to Fig. 3, Fig. 1 shows a control module of a bicycle control device in accordance with the present invention, Fig. 2 shows a circuit block diagram of a bicycle control device in accordance with a first embodiment of the present invention, and Fig. 3 shows the bicycle control device of the first embodiment of the present invention. As shown, a bicycle control device 100 comprises a microprocessor 11, a speed sensing unit 12, a light sensing unit 13, a direction sensing unit 14, a rotating speed sensing unit 15, a body signal sensing unit 16, a keypad 17, a display unit 18, four lamps 21, 22, 23, 24, a lock module 25, and a warning module 26. The microprocessor 11, the speed sensing unit 12, the light sensing unit 13, the direction sensing unit 14, the rotating speed sensing unit 15, the body signal sensing unit 16, the keypad 17 and the display unit 18 are arranged in a control module 3. In this embodiment, the lamp 21 includes a head lamp 211 and a controller 212, which is installed on a front side of the bicycle. The lamp 22 includes a tail lamp 221 and a controller 222, which is installed on a rear side of the bicycle. The lamp 23 includes a left indicator lamp 231 and a controller 232, which is installed in place and adjacent to the lamp 21. The lamp 24 includes a right indicator lamp 241 and a controller 242, which is installed in place and adjacent to the lamp 21. The lock module 25 comprises a lock 251 and a controller 252. The warning module 26 comprises a warning unit 261 and a controller 262.

When a user U rides the bicycle B, the speed sensing unit 12 of the control module 3 detects the speed of the bicycle and generates a speed signal s 1 and sends the speed signal s1 to the microprocessor 11. The light sensing unit 13 detects lightness around the bicycle B and generates a lightness signal s2 and sends the lightness signal s2 to the microprocessor 11. Receiving the speed signal s 1 and lightness signal s2, the microprocessor 11 generates command signals s31, s32 to turn on the head and tail lamps 211, 221 via the controller 212, 222 respectively. If the user U changes the moving direction of the bicycle B, with the manual control of the user, the direction sensing unit 14 of the control module 3 generates a direction signal and sends the direction signal to the microprocessor 11. When the bicycle B turns to the left, the microprocessor 11 generates a control signal s41 and transmits it to the left indicator lamp 231 via the controller 232. Receiving the control signal s41, the left indicator lamp 231 is turned on and flashes. When turning of the bicycle is over, the controller 232 turns off the left indicator lamp 231. Similarly, if the bicycle B turns to the right, the microprocessor 11 generates a control signal s42 and transmits the control signal s42 to the right indicator lamp 241 via the controller 242. Receiving the control signal s42, the right indicator lamp 241 is turned on and flashes. When turning of the bicycle is over, the controller 242 turns off the right indicator lamp 241. Furthermore, the light sensing unit 13 is installed inside the control module 3, and adjacent to the bottom of the control module 3, so as to prevent from influence of external light.

The rotating speed sensing unit 15 detects the rotating speed of the pedal 27 being trodden by the user U, so as to generate a rotating speed signal s5 sending to the microprocessor 11. The body signal sensing unit 16 may detect the user's physical situation and generate a body signal s6 accordingly. The body signal s6 is selected from a group comprising a body temperature signal, a heartbeat signal, and a calorie consumption signal. In addition, when a user presses the keypad 17, the microprocessor 11 may send the traveling information s7 to the display unit 18 for displaying.

If the bicycle B is being parked for less than one minute, the microprocessor 11 turns on the head lamp 211 and the tail lamp 221 at a full light level via the respective controller 212, 222. If the bicycle B is being parked for more than one minute, the controllers 212, 222 respectively turn on the head lamp 211 and the tail lamp 221 at a normal light level. If the bicycle B is being parked more than three minutes, the microprocessor 11 turns off the head lamp 211 and the tail lamp 221, and then sends a lock control signal s81 to lock the bicycle B and a trigger signal s82 to turn on the warning module 26.

If the user U removes the control module 3 from the bicycle B, the controller 252 of the lock module 25 switches on the lock 251 to lock the bicycle B. At the same time, the controller 262 of the warning module 26 turns on the warning unit 261.

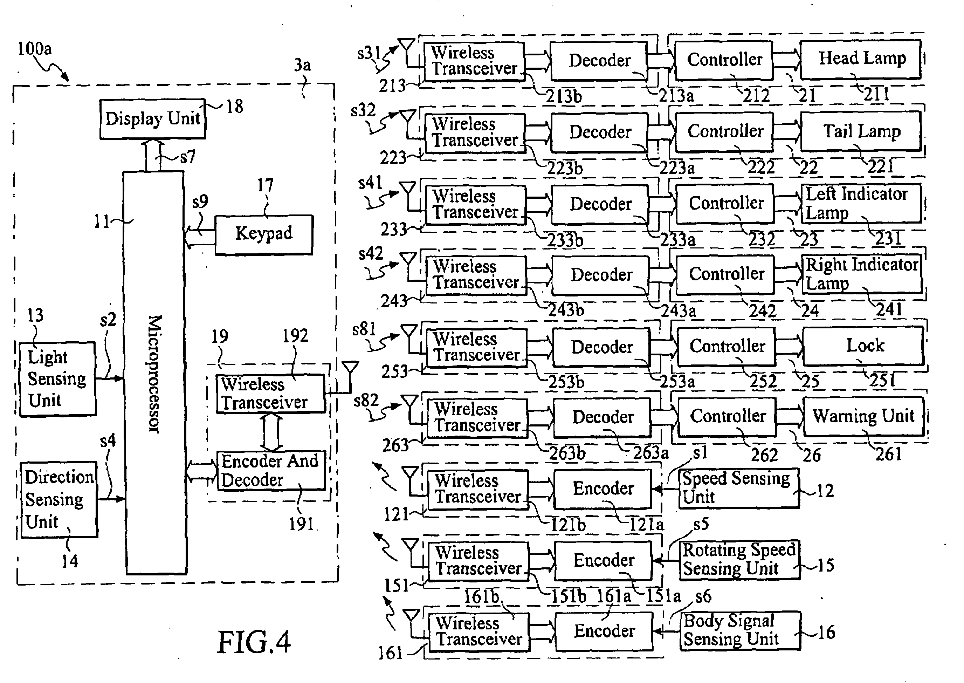

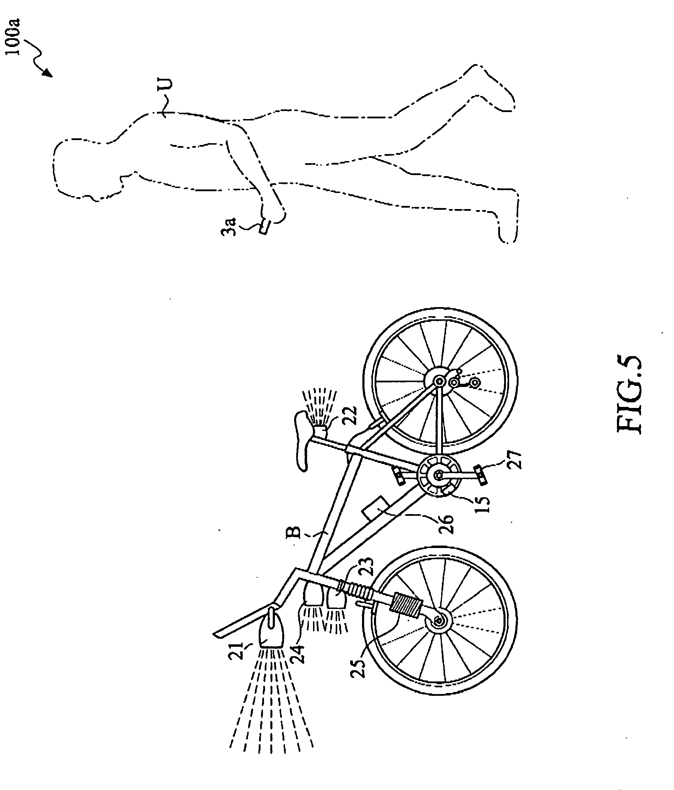

With reference to Figs. 4 and 5 at the same time, Fig. 4 is a circuit block diagram, and Fig. 5 is a perspective view of a bicycle control device in accordance with a second embodiment of the present invention. Since the bicycle control device 100 in the second embodiment is structurally and functionally similar to the first embodiment, components that are the same in the two embodiments are denoted by the same reference numerals. In this embodiment, the speed sensing unit 12 further comprises a wireless transceiving module 121 having an encoder 121 a and a wireless transceiver 121 b, so as to encode a speed signal s1 generated by the speed sensing unit 12, and then the signal s1 is sent to the microprocessor 11 by the transceiver 121b. The rotating speed sensing unit 15 further comprises a wireless transceiving module 151 having an encoder 151a and a wireless transceiver 151b, so as to encode the rotating speed signal s5, and emits the encoded signal s5 via the wireless transceiver 151b. The body signal sensing unit 16 further comprises a wireless transceiving module 161 having an encoder 161a and a wireless transceiver 161b, so as to encode the body signal s6, and emits the encoded signal via the wireless transceiver 161b.

In this embodiment, a control module 3a comprises a microprocessor 11 which is connected with a wireless transceiver module 19. The wireless transceiver module 19 comprises an encoder and decoder 191 and a wireless transceiver 192, so as to receive signals including the speed signals s1, lightness signals s2, direction signals s4,rotating speed signals s5, and body signals s6, and then decode the encoded signals thereof. In addition, the encoder and decoder 191 is also adapted to encode the command signals s31, s32, the control signals s41, s42, the lock control signal s81 and the trigger signal s82 transmitted by the microprocessor 11, and emits the encoded signals by the wireless transceiver 192.

The lamp 21 comprises a wireless transceiving module 213 including a decoder 213a and a wireless transceiver 213b, so as to receive and decode the command signal s31 transmitted by microprocessor 11, and then transmits the decoded signal to the controller 212. Similarly, the lamp 22 comprises a wireless transceiving module 223 including a decoder 223a and a wireless transceiver 223b, so as to receive and decode the command signal s32 transmitted by microprocessor 11, and then transmits the decoded signal to the controller 222. Similarly, the lamp 23 comprises a wireless transceiving module 233 including a decoder 233a and a wireless transceiver 233b, so as to receive and decode the control signal s41 transmitted by microprocessor 11, and then transmits the decoded signal to the controller 222. Similarly, the lamp 24 comprises a wireless transceiving module 243 including a decoder 243a and a wireless transceiver 243b, so as to receive and decode the command signal s42 transmitted by microprocessor 11, and then transmits the decoded signal to the controller 242.

The lock module 25 further includes a wireless transceiving module 253 comprising a decoder 253a and a wireless transceiver 253b, so as to receive and decode the lock control signal s81 transmitted by microprocessor 11, and then transmits the decoded signal to the controller 252. The warning module 26 includes a wireless transceiving module 253 comprising a decoder 263a and a wireless transceiver 263b, so as to receive and decode the trigger signal s82 transmitted by microprocessor 11, and then transmits the decoded signal to the controller 262.

If the user U removes the control module 3a from the bicycle B, the controller 252 of the lock module 25 detects the removal of the control module 3a and switches on the lock 251 to lock the bicycle B. At the same time, controller 262 of the warning module 26 also detects the removal of the control module 3a and turns on the warning unit 261.

When the user U would like to look for the bicycle B, just need to press the bicycle location finding key 171 of the keypad 17, and then the keypad 17 transmits a bicycle finding signal s9 to the microprocessor 11. When the microprocessor 11 receives the bicycle finding signal s9, the wireless transceiver module 19 encodes the received signal s9 and emits the encoded signal s9. Once the bicycle B receives the bicycle finding signal s9, the controller 222 turns on the tail lamp 221 to flash and the warning module 26 sends a beep. After that, the lock 241 of the bicycle B is being unlocked, and the warning module 26 is being relieved.

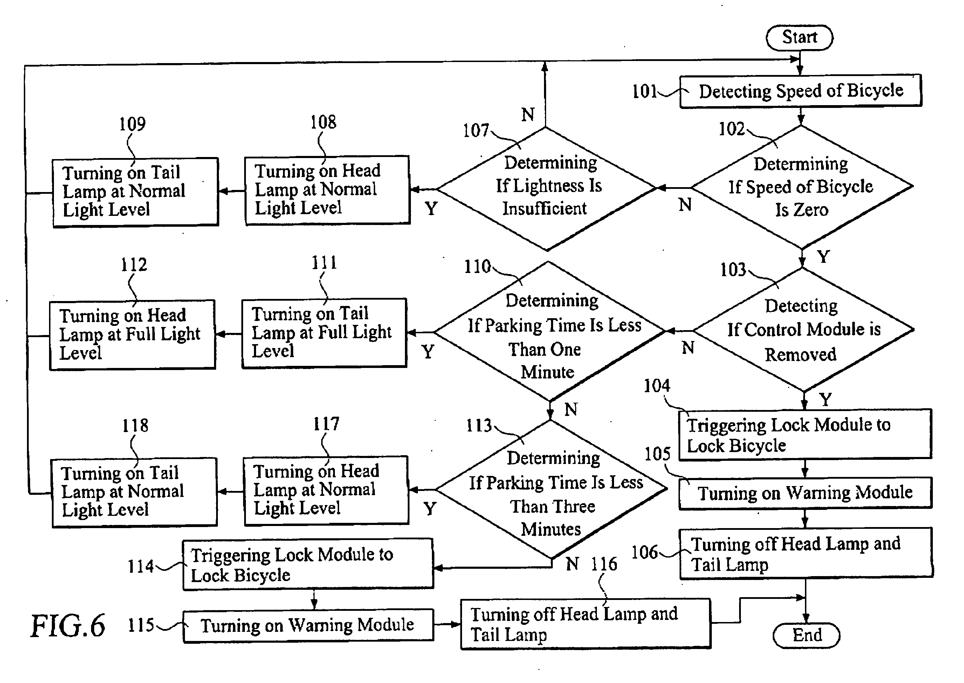

Please refer to Fig. 6 at the same time. Fig. 6 is a flow chart of an operation of the control device in accordance with the present invention. As shown, when a user manipulates the control module 3, the speed sensing unit 12 would detect the speed of the bicycle B and generate a speed signal s1 (step 101). Then the speed sensing unit 12 sends the speed signal s1 to the microprocessor 11 for determining whether the speed of the bicycle B is zero (step 102). Next, it is determined if the control module 3 is removed from the bicycle or not (step 103). When the speed of the bicycle B is zero and the control module 3 is being removed, the microprocessor 11 transmits a lock control signal s81 and a trigger signal s82. Meanwhile, the lock module 25 receives the lock control signal s82, and triggers the lock module 21 to lock the bicycle B (step 104). When the warning module 26 receives the trigger signal s82, the warning unit 261 is turned on (step 105). The controller 212 of the lamp 21 turns off the head lamp 211, and the controller 222 of the lamp 22 turns off the tail lamp 221 (step 106).

Alternatively, when the speed sensing unit 12 detects that the speed of the bicycle B is not zero and the bicycle B is moving, the light sensing unit 13 detects lightness around the bicycle B (step 107). When it is determined that lightness around the bicycle B is insufficient, the light sensing unit 13 sends a light signal s2 to the microprocessor 11, and the microprocessor 11 generates a command signal s31 to turn on the head lamp 211 at a normal light level (step 108), and generates a command signal s32 to turn on the tail lamp 221 at a normal light level (step 109). Contrarily, when lightness around the bicycle B is sufficient, the head lamp 211 and the tail lamp 221 will not be turned on, and the speed sensing unit 12 continues to detect the speed of the bicycle B.

When the speed sensing unit 12 detects that the speed of the bicycle B is zero and the control module 3 is not being removed, the microprocessor 11 counts the parking time of the bicycle B and determines whether the parking time is less than one minute (step 110). If the parking time of the bicycle B is less than one minute, the microprocessor 11 sends a command signal s32 to the controller 222 to turn on the tail lamp 221 at a full light level (step 111). And the controller 211 also turns on the head lamp 211 at a full light level (step 112). After that, the speed sensing unit 12 continues to detect the speed of the bicycle B.

It is determined if the parking time of the bicycle B exceeds three minutes, and if the parking time of the bicycle B is less than three minutes (step 113), the microprocessor 11 sends a lock control signal s81 to lock the bicycle B (step 114). And then the microprocessor 11 transmits a trigger signal s82 to turn on the warning module 26 (step 115). The controllers 211, 221 turn off the head lamp 211 and the tail lamp 221 respectively (step 116). Alternatively, if parking time of the bicycle B is less than three minutes, the microprocessor 11 transmits a command signal s31 to the controller 211 to turn on the head lamp 21 at a normal light level (step 117). At the same time, the microprocessor 11 transmits a command signal s32 to the controller 221 to turn on the tail lamp 221 at a normal light level (step 118).

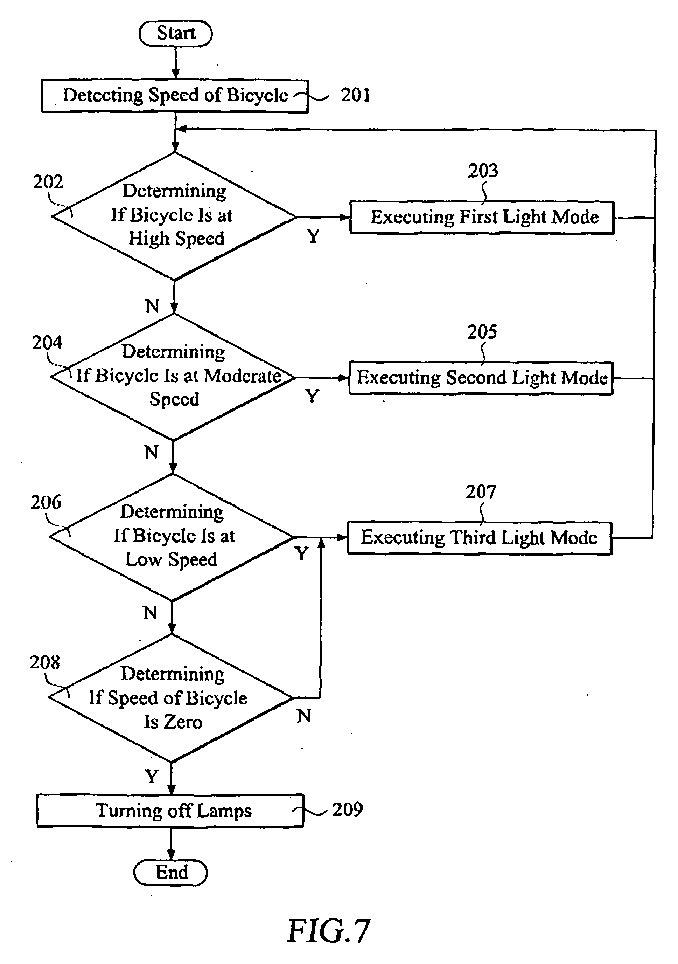

Fig. 7 is a flow chart of lamp regulation at different speed. As shown, the speed sensing unit 12 detects the speed of the bicycle B (step 201), and then generates a speed signal s1 and transmit the signal to the microprocessor 11 (step 202). The microprocessor 11 determines if the bicycle is at a high speed. When the bicycle is at a high speed, a first light mode is being executed to turn on the lamps at a full light level (step 203). The microprocessor 11 determines if the bicycle is at a moderate speed (step 204). When the bicycle is at a moderate speed, a second light mode is being executed to turn on the lamps at a normal light level (step 205). The microprocessor 11 determines if the bicycle is at a low speed (step 206). When the bicycle is at a low speed, a third light mode is being executed to turn on the lamps at a weak light level (step 207). The microprocessor 11 determines if the speed of the bicycle is zero (step 208). If the bicycle is still moving, the third light mode is kept executing, and the lamps are at the weak light level (step 207). If the bicycle stops, the lamps are turned off (step 209).

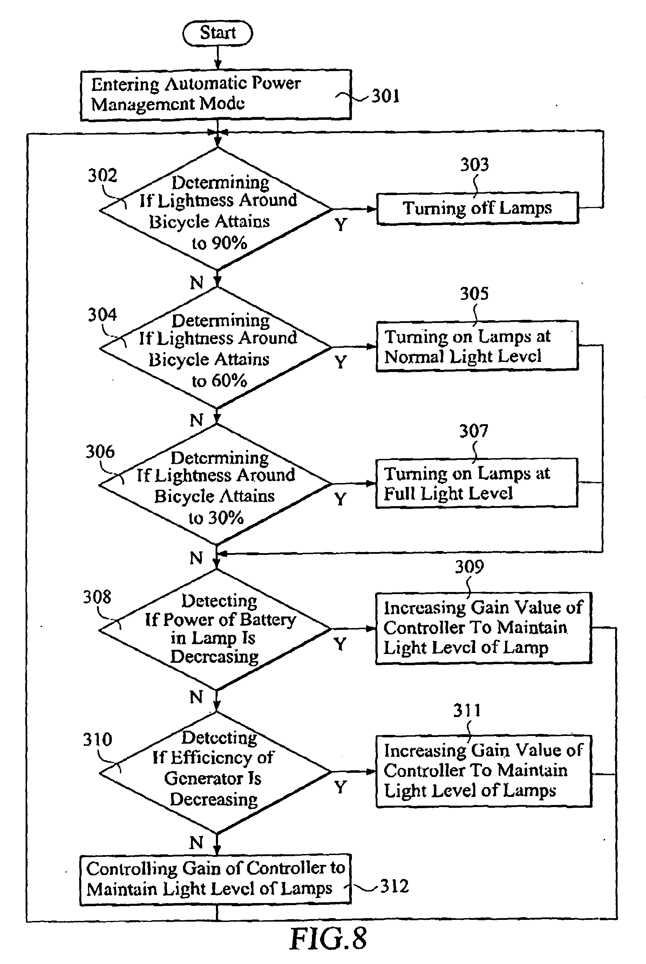

Fig. 8 is a flow chart of automatic power management for the present invention. The present invention may further install a power generator on the hub of the bicycle, in order to provide power when the bicycle is moving. Thus, by cooperating with the automatic power management of the present invention, the power generator may reach the maximum efficiency. As shown, the first step is to enter an automatic power management mode (step 301). The light sensing unit detects whether lightness around the bicycle attains to 90% (step 302). When lightness around the bicycle attains to 90%, the lamps are turned off via the controllers (step 303). The light sensing unit detects whether lightness around the bicycle attains to 60% (step 304). When lightness around the bicycle simply attains to 60%, the lamps are turned on at a normal light level via the controllers (step 305). The light sensing unit detects whether lightness around the bicycle attains to 60% (step 306). When lightness around the bicycle simply attains to 30%, the lamps are turned on at a full light level via the controllers (step 307). When the power of a battery in the lamp is decreasing, a gain value of the controller of the lamp is increased, so as to keep the lamp at the predetermined light level (step 311). It is determined if the power of the generator is decreasing (step 310). When the power of the generator is decreasing, a gain value of the controller is increased, so as to keep the lamp at the predetermined light level (step 311). When the power of the battery and that of the power generator are normal or increasing, the gain value of the controller is kept unchanged or decreased, so as to maintain the lamp at the predetermined light level (step 312).

## Claims

1. A bicycle control device, comprising:
a microprocessor (11);
at least one lamp (21, 22, 23, 24) electrically connected to the microprocessor (11);
a light sensing unit (13) electrically connected to the microprocessor (11), for detecting an ambient light level around the bicycle, generating an ambient light level signal in response to the ambient light level, and sending the ambient light level signal to the microprocessor (11); and
a first speed sensing unit (12) electrically connected to the microprocessor (11), for detecting a speed of the bicycle, generating a first speed signal in response to the speed of the bicycle, and sending the first speed signal to the microprocessor (11);
**characterized in that** the bicycle control device further comprises a further sensing unit for generating a further signal corresponding to a body activity of a user riding the bicycle, and sending the further signal to the microprocessor (11), wherein the further sensing unit is selected from the group consisting of: (i) a second speed sensing unit (15) connected to the microprocessor (11), for detecting a speed of rotation of a pedal of the bicycle so as to generate a second speed signal, and sending the second speed signal to the microprocessor (11), and
(ii) a body signal sensing unit (16) connected to the microprocessor (11) for detecting a user's physical state, generating a body signal corresponding to the user's physical state, and transmitting the body signal to the microprocessor (11);
and the microprocessor (11) receives the ambient light level signal, the first speed signal, and the second speed signal or body signal, so as to generate a command signal to turn on the lamp (21, 22, 23, 24) and adjust a luminance of the lamp (21, 22, 23, 24) according to the ambient light level signal.

2. The bicycle control device as claimed in claim 1, further comprising a wireless transceiver module (19) connected to the microprocessor (11) for transmitting the command signal.

3. The bicycle control device as claimed in claim 1, **characterized in that** the second speed sensing unit (15) is electrically connected with a wireless transceiving module (151) comprising an encoder (151a) and a wireless transceiver (151b).

4. The bicycle control device as claimed in claim 1, further comprising a warning module (26) connected with the microprocessor (11) via a controller (262), the warning module (26) being actuated by a trigger signal outputted from the microprocessor (11).

5. The bicycle control device as claimed in claim 1, further comprising a lock module (25) connected with the microprocessor (11) via a controller (252), the lock module (25) being actuated by a lock control signal outputted from the microprocessor (11).

6. The bicycle control device as claimed in claim 5, **characterized in that** the controller (252) is further connected with a wireless transceiving module (253) having a wireless transceiver (253b) and a decoder (253a).

7. The bicycle control device as claimed in claim 1, **characterized in that** the first speed sensing unit (12) is connected with a wireless transceiving module (121) having an encoder (121a) and a wireless transceiver (121b).

8. The bicycle control device as claimed in claim 1, further comprising a keypad (17) connected with the microprocessor (11).

9. The bicycle control device as claimed in claim 8, **characterized in that** the keypad (17) further comprises a bicycle location finding key (171) for transmitting a bicycle finding signal being operated by a user.

10. The bicycle control device as claimed in claim 1, further comprising a display unit (18) connected to the microprocessor (11) for displaying at least one traveling information of the bicycle.

11. The bicycle control device as claimed in claim 1, **characterized in that** the body signal is selected from one of or a combination of a body temperature signal, a heartbeat signal, and a calorie consumption signal.

12. The bicycle control device as claimed in claim 1, **characterized in that** the body signal sensing unit (16) is connected with a wireless transceiving module (161) comprising an encoder (161a) and a wireless transceiver (161b).

13. The bicycle control device as claimed in claim 1, further comprising a direction sensing unit (14) connected to the microprocessor (11) for generating a direction signal to control the lamp (21, 22, 23, 24).

## Patentansprüche

1. Fahrrad-Steuergerät, umfassend:
einen Mikroprozessor (11);
wenigstens eine elektrisch an den Mikroprozessor (11) angeschlossene Lampe (21, 22, 23, 24);
eine elektrisch an den Mikroprozessor (11) angeschlossene Lichtstärken-Sensoreinheit (13) zur Bestimmung des Umgebungslichtpegels um das Fahrrad herum, die ein den Lichtverhältnissen entsprechendes Umgebungslichtpegelsignal generiert und dieses an den Mikroprozessor (11) überträgt; und
eine erste, an den Mikroprozessor (11) elektrisch angeschlossene Geschwindigkeitsmesseinheit (12) zur Ermittlung der Fahrradgeschwindigkeit, die ein erstes, der Fahrradgeschwindigkeit entsprechendes Geschwindigkeitssignal liefert und dieses erste Geschwindigkeitssignal an den Mikroprozessor (11) überträgt;
**dadurch gekennzeichnet, dass** das Fahrzeug-Steuergerät des Weiteren eine weitere Sensoreinheit zur Generierung eines weiteren, der körperlichen Aktivität des Fahrradfahrers entsprechenden Signals und der Übertragung dieses Signals an den Mikroprozessor (11) aufweist, wobei diese weitere Sensoreinheit aus der Gruppe gewählt wird, die:
(i) ein zweites, an den Mikroprozessor (11) angeschlossenes Geschwindigkeitsmessteil (15) zur Bestimmung der Umlaufgeschwindigkeit eines Pedals des Fahrrads zur Generierung eines zweiten Geschwindigkeitssignals und zur Übertragung dieses zweiten Signals an den Mikroprozessor (11) aufweist, sowie
(ii) eine an den Mikroprozessor (11) angeschlossene Körpersignal-Sensoreinheit (16) zur Bestimmung des physischen Zustands eines Benutzers, die ein Körpersignal generiert, das dem physischen Zustand des Benutzers entspricht;
wobei der Mikroprozessor (11) das Umgebungslichtpegel-Signal, das erste Geschwindigkeitssignal sowie das zweite Geschwindigkeits- oder Körpersignal empfängt, um hieraus ein Befehlssignal zum Einschalten der Lampe (21,22, 23, 24) und zur Einstellung der Leuchtstärke der Lampe (21, 22, 23, 24) entsprechend dem Umgebungslichtpegel zu generieren.

2. Fahrrad-Steuergerät gemäß Anspruch 1, umfassend des Weiteren ein Sender-Empfänger-Modul (19), das an den Mikroprozessor (1) angeschlossen ist, um das Befehlssignal zu übertragen.

3. Fahrrad-Steuergerät gemäß Anspruch 1, **dadurch gekennzeichnet, dass** die zweite Geschwindigkeits-Sensoreinheit (15) elektrisch mit einem Drahtlos-Sender-Empfängermodul (151) verbunden ist, das einen Kodierer (151a) und einen Drahtlos-Sender-Empfänger (151b) aufweist.

4. Fahrrad-Steuergerät gemäß Anspruch 1, umfassend des Weiteren ein Warnmodul (26), das über ein Steuerteil (262) an den Mikroprozessor (11) angeschlossen ist, wobei das Warnmodul (26) von einem Ausgangssignal des Mikroprozessors (11) geschaltet wird.

5. Fahrrad-Steuergerät gemäß Anspruch 1, umfassend des Weiteren ein Verriegelungsmodul (25), das über ein Steuerteil (252) an den Mikroprozessor (11) angeschlossen ist, wobei das Verriegelungsmodul (25) von einem Ausgangssignal des Mikroprozessors (11) geschaltet wird.

6. Fahrrad-Steuergerät gemäß Anspruch 5, **dadurch gekennzeichnet, dass** das Steuerteil (252) des Weiteren mit einem Drahtlos-Sender-Empfängermodul (253) mit einem Drahtlos-Empfänger (253b) und einem Dekodierer (253a) ausgestattet ist.

7. Fahrrad-Steuergerät gemäß Anspruch 1, **dadurch gekennzeichnet, dass** die erste Geschwindigkeits-Sensoreinheit (12) elektrisch mit einem Drahtlos-Sender-Empfängermodul (121) verbunden ist, das einen Kodierer (121a) und einen Drahtlos-Sender-Empfänger (121b) aufweist.

8. Fahrrad-Steuergerät gemäß Anspruch 1, umfassend des Weiteren eine an den Mikroprozessor (11) angeschlossene Zehnertastatur (17).

9. Fahrrad-Steuergerät gemäß Anspruch 8, **dadurch gekennzeichnet, dass** die Zehnertastatur (17) des Weiteren eine Fahrrad-Suchtaste (171) zur Betätigung durch einen Benutzer zur Übertragung eines Signal zum Suchen des Fahrrads aufweist.

10. Fahrrad-Steuergerät gemäß Anspruch1 umfassend des Weiteren ein an den Mikroprozessor (11) geschlossenes Anzeigeteil (18) zur Anzeige wenigstens einer Information über die Fahrt des Fahrrads.

11. Fahrrad-Steuergerät gemäß Anspruch 1, **dadurch gekennzeichnet, dass** als Körpersignal entweder ein Körpertemperatur-Signal, ein Herzfrequenz-Signal und ein Kalorieverbrauchssignal oder eine Kombination derselben gewählt wird.

12. Fahrrad-Steuergerät gemäß Anspruch 1, **dadurch gekennzeichnet, dass** die Körpersignal-Sensoreinheit (16) an ein Drahtlos-Sender-Empfänger-Modul (161) mit einem Kodierer (161a) und einem Drahtlos-Sender-Empfänger (161b) angeschlossen ist.

13. Fahrrad-Steuereineit gemäß Anspruch 1, des Weiteren umfassend eine an den Mikroprozessor (11) angeschlossene Richtungssensoreinheit (14) zur Generierung eines Richtungssignals zur Lampensteuerung (21, 22, 23, 24).

## Revendications

1. Dispositif de commande de bicyclette, comportant :
un microprocesseur (11) ;
au moins un phare (21, 22, 23, 24) raccordé électriquement au microprocesseur (11) ;
une unité de détection de lumière (13) raccordée électriquement au microprocesseur (11), permettant de détecter un niveau de lumière ambiante autour de la bicyclette, de générer un signal de niveau de lumière ambiante en réponse au niveau de lumière ambiante, et d'envoyer le signal de niveau de lumière ambiante au microprocesseur (11) ; et
une première unité de détection de vitesse (12) raccordée électriquement au microprocesseur (11), permettant de détecter une vitesse de la bicyclette, de générer un premier signal de vitesse en réponse à la vitesse de la bicyclette, et d'envoyer le premier signal de vitesse au microprocesseur (11) ;
**caractérisé en ce que** le dispositif de commande de bicyclette comporte par ailleurs une unité de détection supplémentaire permettant de générer un signal supplémentaire correspondant à une activité du corps d'un utilisateur monté sur la bicyclette, et d'envoyer le signal supplémentaire au microprocesseur (11), dans lequel l'unité de détection supplémentaire est sélectionnée dans le groupe constitué par : (i) une seconde unité de détection de vitesse (15) raccordée au microprocesseur (11), permettant de détecter une vitesse de rotation d'une pédale de la bicyclette de manière à générer un second signal de vitesse, et d'envoyer le second signal de vitesse au microprocesseur (11), et
(ii) une unité de détection de signal en provenance du corps (16) raccordée au microprocesseur (11) permettant de détecter un état physique de l'utilisateur, de générer un signal en provenance du corps correspondant à l'état physique de l'utilisateur, et de transmettre le signal en provenance du corps au microprocesseur (11) ;
et le microprocesseur (11) reçoit le signal de niveau de lumière ambiante, le premier signal de vitesse, et le second signal de vitesse ou signal en provenance du corps, de manière à générer un signal de commande pour allumer le phare (21, 22, 23, 24) et ajuster une luminance du phare (21, 22, 23, 24) en fonction du signal de niveau de lumière ambiante.

2. Dispositif de commande de bicyclette selon la revendication 1, comportant par ailleurs un module émetteur-récepteur sans fil (19) raccordé au microprocesseur (11) permettant d'émettre le signal de commande.

3. Dispositif de commande de bicyclette selon la revendication 1, **caractérisé en ce que** la seconde unité de détection de vitesse (15) est raccordée électriquement à un module d'émission-réception sans fil (151) comportant un encodeur (151a) et un émetteur-récepteur sans fil (151b).

4. Dispositif de commande de bicyclette selon la revendication 1, comportant par ailleurs un module avertisseur (26) raccordé au microprocesseur (11) par le biais d'un contrôleur (262), le module avertisseur (26) étant actionné par un signal de déclenchement émis en provenance du microprocesseur (11).

5. Dispositif de commande de bicyclette selon la revendication 1, comportant par ailleurs un module de verrouillage (25) raccordé au microprocesseur (11) par le biais d'un contrôle (252), le module de verrouillage (25) étant actionné par un signal de commande de verrouillage émis en provenance du microprocesseur (11).

6. Dispositif de commande de bicyclette selon la revendication 5, **caractérisé en ce que** le contrôleur (252) est par ailleurs raccordé à un module d'émission-réception sans fil (253) ayant un émetteur-récepteur sans fil (253b) et un décodeur (253a).

7. Dispositif de commande de bicyclette selon la revendication 1, **caractérisé en ce que** la première unité de détection de vitesse (12) est raccordée à un module d'émission-réception sans fil (121) ayant un encodeur (121a) et un émetteur-récepteur sans fil (121b).

8. Dispositif de commande de bicyclette selon la revendication 1, comportant par ailleurs un clavier (17) raccordé au microprocesseur (11).

9. Dispositif de commande de bicyclette selon la revendication 8, **caractérisé en ce que** le clavier (17) comporte par ailleurs une touche de recherche de localisation de bicyclette (171) permettant de transmettre un signal de recherche de bicyclette qu'actionne un utilisateur.

10. Dispositif de commande de bicyclette selon la revendication 1, comportant par ailleurs une unité d'affichage (18) raccordée au microprocesseur (11) permettant d'afficher au moins une information de déplacement de la bicyclette.

11. Dispositif de commande de bicyclette selon la revendication 1, **caractérisé en ce que** le signal en provenance du corps est sélectionné parmi l'un ou une combinaison d'un signal de température corporelle, d'un signal de battement de coeur, et d'un signal de consommation de calories.

12. Dispositif de commande de bicyclette selon la revendication 1, **caractérisé en ce que** l'unité de détection de signal en provenance du corps (16) est raccordée à un module d'émission-réception sans fil (161) comportant un encodeur (161a) et un émetteur-récepteur sans fil (161b).

13. Dispositif de commande de bicyclette selon la revendication 1, comportant par ailleurs une unité de détection de direction (14) raccordée au microprocesseur (11) permettant de générer un signal de direction pour commander le phare (21, 22, 23, 24).
